# EUROPEAN PATENT SPECIFICATION

(11) **EP 2 700 677 B1**
(45) Date of publication and mention of the grant of the patent: **20.07.2016**
(21) Application number: 13179263.2
(22) Date of filing: 05.08.2013
(51) Int. Cl.: C08L 83/04, C08L 83/07

(54) **Addition-Curable Fluorosilicone Rubber Composition**
Additionshärtbare Fluorsilikonkautschukzusammensetzung
Composition de caoutchouc de fluorosilicone durcissable par addition

(30) Priority: 22.08.2012 JP 2012183129
(43) Date of publication of application: 26.02.2014
(73) Proprietor: Shin-Etsu Chemical Co., Ltd., Tokyo (JP)
(72) Inventor: Uno, Takao, Annaka-shi, Gunma (JP); Hayashida, Osamu, Annaka-shi, Gunma (JP)
(74) Representative: Ter Meer Steinmeister & Partner

(56) References cited:
- EP-A1- 1 361 253
- US-A1- 2006 106 156

## Description

### TECHNICAL FIELD

This invention relates to a fluorosilicone rubber composition of the millable type based on an organopolysiloxane which is substituted with trifluoropropyl group mainly for the purpose of improving oil resistance. As used herein, the term "millable type" refers to a non-liquid gum-like silicone rubber composition which can be milled on a roll mill and lacks self-flow at room temperature. More particularly, it relates to an addition-curable fluorosilicone rubber composition of the millable type which can be cured through hydrosilylation reaction and molded under pressureless conditions so that an improvement in productivity or exploitation of novel applications is expectable.

### BACKGROUND ART

It is noted that fluorosilicone rubber compositions (uncured) or fluorosilicone rubbers (cured) are essentially different from ordinary dimethylsilicone rubber compositions based on a linear dimethylpolysiloxane whose backbone is composed of recurring dimethylsiloxane units or cured products thereof, in that the base polymer constituting the rubber matrix in the former is a linear (3,3,3-trifluoropropyl)(methyl)polysiloxane whose backbone is composed of difunctional diorganosiloxane units consisting essentially of recurring (3,3,3-trifluoropropyl)(methyl)siloxane units.

Because of freeze resistance, oil resistance, fuel oil resistance and compression recovery, trifluoropropyl-substituted fluorosilicone rubber compositions are often used as parts for automobiles, ships, aircraft and other transporting vehicles. The fluorosilicone rubber compositions are molded and vulcanized or cured by common rubber molding techniques such as press molding, injection molding, and transfer molding, yielding molded rubber parts such as o-rings, diaphragms and gaskets. The mainstream vulcanization curing method used in the art is vulcanization with well-known organic peroxides, typically 2,5-dimethyl-2,5-bis(tert-butylperoxy)hexane and dicumyl peroxide. However, when fluorosilicone rubber compositions are vulcanized with these well-known organic peroxides, the vulcanization curing rate is slow as compared with ordinary dimethylsilicone rubber compositions. Then the vulcanization curing step takes a longer time, which is unfavorable for productivity. Studies have been made how to shorten the vulcanization curing time in order to improve productivity.

If the vulcanization curing time is short, the crosslinking density does not reach the desired level. Many problems then arise including shortage of hardness, shortage of strength, an aggravation of heat resistance, an aggravation of compression set (that is important as sealing material), and an aggravation of oil resistance (that manifests as a notable oil swell).

The vulcanization curing rate may be accelerated by increasing the amount of organic peroxide used. However, even when the amount of organic peroxide is increased beyond the proper amount, the crosslinking density is not increased beyond a certain level. Owing to the influence of an excess of organic peroxide and decomposition residues thereof, the molded parts are rather exacerbated in compression set, heat resistance and oil resistance.

Attempts are also made to accelerate the vulcanization curing rate at the same molding temperature using acyl type organic peroxides having a low decomposition temperature such as 2,4-dichlorobenzoyl peroxide and p-methylbenzoyl peroxide, peroxyketal type organic peroxides such as 1,1-bis(tert-butylperoxy)-3,3,5-trimethylcyclohexane, and percarbonate type organic peroxides such as 1,6-bis(tert-butylperoxycarbonyloxy)hexane. When fluorosilicone rubber compositions are vulcanized with these peroxides, the vulcanization curing rate is accelerated over the use of ordinary alkyl type organic peroxides, typically 2,5-dimethyl-2,5-bis(tert-butylperoxy)hexane. However, unwanted problems ensue. For example, rubber physical properties are poor. The fast vulcanization curing step loses control. In the case of molding in a mold, the rubber composition prematurely cures before it fully flows and fills in the mold, resulting in molded parts of undesired shape.

JP-A 2002-069301 discloses that the vulcanization curing time can be shortened by a combination of a percarbonate type organic peroxide with a co-vulcanizing agent having a molecular weight of up to 10,000, typically triallyl isocyanurate. However, problems including increased hardness and reduced elongation are left.

Elevating the vulcanization curing temperature is an effective measure for reducing the vulcanization curing time because decomposition of the organic peroxide is promoted. At the elevated temperature, however, vulcanization curing is so fast that the rubber composition has been cured before it fully flows and fills in the mold. This often gives rise to problems that the molded parts have undesired shape, are distorted, discolored or unevenly colored, and seized to the mold.

The vulcanization method resorting to addition reaction using platinum-based catalysts instead of the organic peroxides is also studied as means for shortening the vulcanization curing time. The addition reaction method known thus far is believed unpractical for fluorosilicone rubber compositions because vulcanization hardly proceeds with these catalysts. EP 1 361 253 A1 is directed to an addition curable silicone rubber composition comprising (A) a liquid organopolysiloxane containing at least two alkenyl groups, (B) a gum-like organopolysiloxane, (C) an organohydrogenpolysiloxane, (D) fumed silica, (E) an addition reaction functionality-free organopolysiloxane, and (F) an addition reaction catalyst.

### Citation List

Patent Document 1: JP-A 2002-069301 (USP 6610778)

### SUMMARY OF INVENTION

In an attempt to vulcanize fluorosilicone rubber compositions with organic peroxides, the known vulcanization method is not readily modified so as to reduce the vulcanization curing time and is difficult to control the vulcanization curing time. As a result, molded parts of the desired shape are not obtainable, or if obtained, molded parts have poor rubber physical properties. Additionally, secondary vulcanization is necessary to remove the excess of organic peroxide or decomposition residues thereof. The invention is made under the above circumstances. An object of the invention is to provide a fluorosilicone rubber composition adapted to be vulcanized via addition reaction using a platinum based catalyst, in which the structure of a base polymer and the structure of an organohydrogenpolysiloxane serving as a curing or crosslinking agent are optimized so that effective vulcanization may proceed at a sufficient rate to shorten the vulcanization curing time.

The invention is directed to an addition-curable fluorosilicone rubber composition comprising an organohydrogenpolysiloxane of a specific molecular structure as a crosslinking agent according to claim 1. The inventors have found that a fluorosilicone rubber composition comprising a base polymer and a crosslinking agent can be effectively vulcanized and cured with a platinum based catalyst, when the base polymer is a gum-like organopolysiloxane having aliphatic unsaturated groups which are contained as 0.10 to 1.0 mol% of organoalkenylsiloxane units (typically methylvinylsiloxane units) in the difunctional diorganosiloxane units constituting the backbone, and the crosslinking agent is an organohydrogenpolysiloxane containing at least two silicon-bonded hydrogen atoms per molecule selected from a trifluoropropyl-containing organohydrogenpolysiloxane of 5 to 52 silicon atoms and a trifluoropropyl-free organohydrogenpolysiloxane of 4 to 22 silicon atoms.

In one aspect, the invention provides an addition-curable fluorosilicone rubber composition comprising
(A) 100 parts by weight of a gum-like organopolysiloxane having the average compositional formula (1):

   R¹ₐR²_{b}R³_{c}SiO_{(4-a-b-c)/2} (1)

   wherein R¹ is a trifluoropropyl group, R² is each independently a monovalent aliphatic unsaturated hydrocarbon group of 2 to 8 carbon atoms or hydroxyl group, at least two of R² are monovalent aliphatic unsaturated hydrocarbon groups, R³ is each independently an unsubstituted, monovalent aliphatic saturated hydrocarbon group of 1 to 8 carbon atoms or monovalent aromatic hydrocarbon group of 6 to 10 carbon atoms, a, b and c are positive numbers satisfying 0.96 ≤ a ≤ 1.01, 0.0005 ≤ b ≤ 0.01, 0.96 ≤ c ≤ 1.06, and 1.98 ≤ a+b+c ≤ 2.02, the organopolysiloxane having a weight average DOP of at least 2,000,
(B) 5 to 100 parts by weight of a silica filler,
(C) at least one organohydrogenpolysiloxane selected from a trifluoropropyl-containing organohydrogenpolysiloxane having the general formula (2): 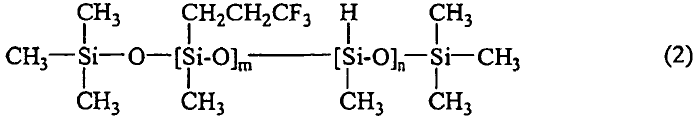 wherein m is an integer of 1 to 48, n is an integer of 2 to 40, and the sum of m and n is 3 to 50, and a trifluoropropyl-free organohydrogenpolysiloxane having the general formula (3): 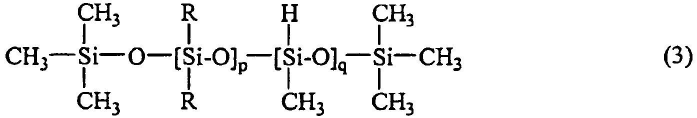 wherein R is independently methyl or phenyl, p is an integer of 0 to 18, q is an integer of 2 to 15, the sum of p and q is 2 to 20, and the ratio of q/(p+2) is at least 1, in such an amount that a molar ratio of silicon-bonded hydrogen atoms in component (C) to monovalent aliphatic unsaturated hydrocarbon groups in component (A) falls in a range of 0.9 to 10,
(D) a catalytic amount of a hydrosilylation catalyst.

In a preferred embodiment, the organopolysiloxane as component (A) has a backbone composed of difunctional diorganosiloxane units containing 0.10 to 1.0 mol% of organoalkenylsiloxane units.

According to the invention, component (C) is free of hydroxyl in the molecule.

In one preferred embodiment, in the general formula (2), preferably the ratio of m/n is at least 1.

### ADVANTAGEOUS EFFECTS OF INVENTION

As compared with prior art well-known fluorosilicone rubber compositions, the fluorosilicone rubber composition of addition cure type according to the invention can be vulcanized and cured within a short time. An improvement in productivity is thus expectable. The composition can be molded not only by conventional methods such as press molding, injection molding and transfer molding, but also by pressureless molding methods such as extrusion molding and calender molding. The composition is thus expected to exploit novel applications where only extrusion molding is acceptable.

### DESCRIPTION OF PREFERRED EMBODIMENT

In the disclosure, DOP stands for a degree of polymerization. As used herein, the terms "average DOP" and "average molecular weight" refer to a weight average DOP and weight average molecular weight, respectively, which are typically determined versus polystyrene standards by gel permeation chromatography (GPC) using toluene as development solvent.

Component (A) is a base polymer in the fluorosilicone rubber composition of addition cure type. It is a gum-like organopolysiloxane represented by the average compositional formula (1), containing substantially the same number of trifluoropropyl groups as the number of silicon atoms in a molecule (e.g., the value of "a" in formula (1) is 0.96 to 1.01), and having a weight average DOP of at least 2,000.

R¹ₐR²_{b}R**³**_{c}SiO_{(4-a-b-c)/2} (1)

In formula (1), R¹ is a trifluoropropyl group, specifically 3,3,3-trifluoropropyl. R² is each independently a monovalent aliphatic unsaturated hydrocarbon group of 2 to 8 carbon atoms, preferably 2 to 6 carbon atoms or a hydroxyl group. At least two of R² are monovalent aliphatic unsaturated hydrocarbon groups. Suitable monovalent aliphatic unsaturated hydrocarbon groups include alkenyl groups such as vinyl, allyl, propenyl, butenyl, and hexenyl. R³ is each independently an unsubstituted, monovalent aliphatic saturated hydrocarbon group of 1 to 8 carbon atoms, preferably 1 to 6 carbon atoms or a monovalent aromatic hydrocarbon group of 6 to 10 carbon atoms, preferably 6 to 8 carbon atoms. Suitable groups include alkyl groups such as methyl, ethyl, propyl, butyl, hexyl, and cyclohexyl, aryl groups such as phenyl and tolyl, and aralkyl groups such as benzyl. Of these, methyl, ethyl, propyl and phenyl are preferred as R³. The subscripts a, b and c are positive numbers satisfying 0.96 ≤ a ≤ 1.01, preferably 0.98 ≤ a ≤ 1.005, 0.0005 ≤ b ≤ 0.01, preferably 0.001 ≤ b ≤ 0.01, 0.96 ≤ c ≤ 1.06, preferably 0.98 ≤ c ≤ 1.005, and 1.98 ≤ a+b+c ≤ 2.02, preferably 1.99 ≤ a+b+c ≤ 2.01.

Basically the trifluoropropyl-containing organopolysiloxane having formula (1) has a linear structure whose backbone consists of recurring diorganosiloxane units and which is capped at either end of the molecular chain with a triorganosiloxy group or hydroxyl (diorganohydroxysiloxy) group. A mixture of two or more organopolysiloxanes which differ in molecular structure or DOP is also acceptable.

While the organopolysiloxane should contain at least two monovalent aliphatic unsaturated hydrocarbon groups R² per molecule, the preferred R² group is alkenyl, especially vinyl. With respect to the attachment of the monovalent aliphatic unsaturated hydrocarbon group R², it may be positioned at the end of the molecular chain as a substituent group attached to the silicon atom in triorganosiloxy group or at a side chain (at an intermediate or non-terminus position on the molecular chain) as a substituent group attached to the silicon atom in a diorganosiloxane unit of the backbone or both. Preferably, at least two R² groups are positioned at side chains (i.e., as a substituent group attached to the silicon atom in a difunctional diorganosiloxane unit).

Preferably, R² is contained as (organo)(alkenyl)siloxane units (e.g., methylvinylsiloxane units) in an amount of 0.10 to 1.0 mol%, especially 0.12 to 0.5 mol%, based on the overall difunctional diorganosiloxane units of which the backbone is composed. If the content of R²**-**containing (organo)(alkenyl)siloxane units relative to the overall difunctional diorganosiloxane units in the backbone is less than 0.10 mol%, insufficient crosslinking takes place, resulting in molded parts becoming tacky on their surface and having unsatisfactory rubber properties such as low hardness, low tensile strength or tear strength, and increased compression set. If the content exceeds 1.0 mol%, rubber increases its strength beyond the practical level, becomes brittle, and has reduced mechanical strength such as tensile strength or tear strength. In order that rubber have adequate physical properties, the monovalent aliphatic unsaturated hydrocarbon group (R²) should preferably be contained in the backbone in an amount of 0.10 to 1.0 mol%, especially 0.12 to 0.5 mol%.

Further, the trifluoropropyl-containing organopolysiloxane as component (A) should have an average DOP of at least 2,000, specifically 2,000 to 100,000, preferably 2,000 to 10,000, more preferably 2,000 to 8,000, and even more preferably 2,500 to 5,000. As long as its average DOP is in the range, the organopolysiloxane is typically gum-like and exhibits no self-flow at 25°C.

Preferably the organopolysiloxane has a viscosity of at least 100,000 mPa·s at 25°C. More preferably it is gum-like as demonstrated by a viscosity of 100,000 to 100,000,000 mPa·s at 25°C. A gum-like organopolysiloxane is preferred because the rubber obtained by curing the composition is likely to gain strength, one of physical properties. Notably, the viscosity may be measured by a rotational viscometer such as BL, BH, BS or cone-plate type viscometer.

Typical examples of the trifluoropropyl-containing organopolysiloxane as component (A) include trifluoropropylmethylpolysiloxane capped with vinyldimethylsiloxy at both ends of the molecular chain, trifluoropropylmethylsiloxane-vinylmethylsiloxane copolymers capped with vinyldimethylsiloxy at both ends of the molecular chain, trifluoropropylmethylsiloxane-vinylmethylsiloxane copolymers capped with hydroxyl (or silanol) at one end of molecular chain and with vinyldimethylsiloxy at the other end, and trifluoropropylmethylsiloxane-vinylmethylsiloxane copolymers capped with hydroxyl (or silanol) at both ends of the molecular chain.

More specifically, exemplary organopolysiloxanes are shown below. 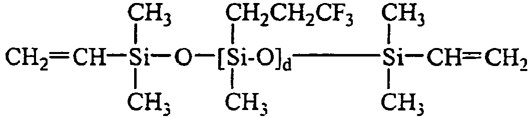 (Herein d is an integer of 2,000 to 4,000.) 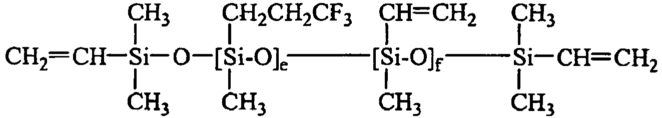 (Herein e is an integer of 2,000 to 4,000, f is an integer of 1 to 40, preferably 2 to 20, e+f is an integer of 2,001 to 4,040, and f/(e+f) is 0.05 to 1.0 mol%, preferably 0.1 to 1.0 mol%.) 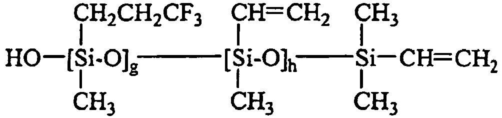 (Herein g is an integer of 2,000 to 4,000, h is an integer of 1 to 40, preferably 2 to 20, g+h is an integer of 2,001 to 4,040, and h/(g+h) is 0.05 to 1.0 mol%, preferably 0.1 to 1.0 mol%.) 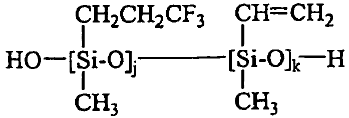 (Herein j is an integer of 2,000 to 4,000, k is an integer of 1 to 40, preferably 2 to 20, j+k is an integer of 2,001 to 4,040, and k/(j+k) is 0.05 to 1.0 mol%, preferably 0.1 to 1.0 mol%.)

The organopolysiloxane having average compositional formula (1) may be prepared as described in JP-A S62-174260, for example, by ring-opening polymerization of tri(trifluoropropyl)trimethylcyclotrisiloxane or copolymerization of tri(trifluoropropyl)trimethylcyclotrisiloxane with tetravinyltetramethylcyclotetrasiloxane, using a siloxane oligomer having the formula (4) as an initiator,.

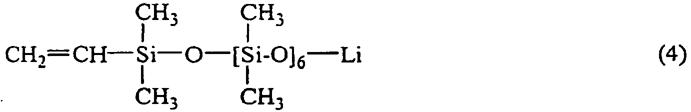

Component (B) is a silica filler. It is typically a reinforcing silica filler essential for endowing the fluorosilicone rubber composition with mechanical strength. To this end, the silica filler should preferably have a specific surface area of at least 50 m²/g, and more preferably 100 to 400 m²/g as measured by the BET method. Exemplary silica fillers include fumed silica (dry silica), fired silica, and precipitated silica (wet silica), which may be used alone or in admixture of two or more. These silica fillers may be treated with surface treating agents such as organopolysiloxanes, organopolysilazanes, chlorosilanes, and alkoxysilanes to render the filler surface hydrophobic.

An appropriate amount of the silica filler (B) blended is 5 to 100 parts, preferably 10 to 60 parts by weight per 100 parts by weight of the organopolysiloxane (A). Less than 5 parts of the filler is too small to achieve the reinforcing effect. If the filler is more than 100 parts, the composition becomes less workable and cures into a fluorosilicone rubber having unsatisfactory physical properties.

Component (C) is an organohydrogenpolysiloxane serving as a crosslinking agent. It is an organohydrogenpolysiloxane containing at least two silicon-bonded hydrogen atoms (i.e., SiH groups) per molecule, but not any hydroxyl group such as a silicon-bonded hydroxyl group (i.e., silanol group). More specifically it is at least one organohydrogenpolysiloxane selected from a trifluoropropyl-containing organohydrogenpolysiloxane selected from a trifluoropropyl-containing organohydrogenpolysiloxane having the general formula (2): 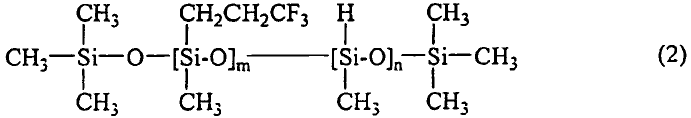 wherein m is an integer of 1 to 48, n is an integer of 2 to 40, and the sum of m and n is 3 to 50, and a trifluoropropyl-free organohydrogenpolysiloxane having the general formula (3): 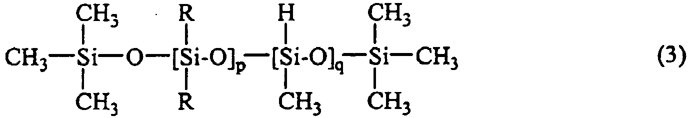 wherein R is independently methyl or phenyl, p is an integer of 0 to 18, q is an integer of 2 to 15, the sum of p and q is 2 to 20, and the ratio of q/(p+2) is at least 1, in such an amount that a molar ratio of silicon-bonded hydrogen atoms in component (C) to monovalent aliphatic unsaturated hydrocarbon groups in component (A) falls in a range of 0.9 to 10The silicon-bonded hydrogen atom (SiH group) is located from the standpoints of improved compression set and easy control of reaction rate on a side chain (i.e., in the backbone as hydrogen atom bonded to the silicon atom in the difunctional organohydrogensiloxane unit, at a non-terminus or intermediate position in the molecular chain).

In general formula (2), m is an integer of 1 to 48, preferably 4 to 20, and n is an integer of 2 to 40, preferably 3 to 20, satisfying 3 ≤ m+n ≤ 50, preferably 4 ≤ m+n ≤ 38, and more preferably 6 ≤ m+n ≤ 30.
In general formula (3), p is an integer of 0 to 18, preferably 0 to 5, and q is an integer of 2 to 15, preferably 3 to 10, satisfying 2 ≤ p+q ≤ 20, preferably 3 ≤ p+q ≤ 16, and more preferably 4 ≤ p+q ≤ 10.

In the organohydrogenpolysiloxane as component (C), the number of silicon atoms per molecule, that is DOP, should be managed in a different way depending on whether or no trifluoropropyl group is contained in the molecule. Specifically, in the case of organohydrogenpolysiloxane containing at least one trifluoropropyl per molecule represented by formula (2), those compounds of 5 to 52 silicon atoms, more preferably 6 to 40 silicon atoms, and even more preferably 12 to 35 silicon atoms per molecule which are liquid at room temperature are preferred. They typically have an average molecular weight of up to 5,000, preferably 430 to 4,000, and more preferably 1,000 to 3,500.

In the case of trifluoropropyl-free organohydrogenpolysiloxane represented by formula (3), those compounds of 4 to 22 silicon atoms, more preferably 5 to 18 silicon atoms, and even more preferably 6 to 11 silicon atoms per molecule which are liquid at room temperature are preferred. They typically have an average molecular weight of up to 1,500, preferably 280 to 1,200, and more preferably 280 to 900.

In the case of trifluoropropyl-containing organohydrogenpolysiloxane containing at least one trifluoropropyl per molecule represented by formula (2), it is preferred for compatibility with and dispersion in component (A) that a molar ratio of trifluoropropyl groups (-CH₂CH₂CF₃ groups) to silicon-bonded hydrogen atoms (SiH groups) in the molecule, which is represented by the value of m/n in formula (2), be at least 1, more preferably 1 to 3. Also, the content of SiH groups in the molecule is preferably 0.0015 to 0.01 mol/g, more preferably 0.002 to 0.008 mol/g.

In the case of trifluoropropyl-free organohydrogenpolysiloxane represented by formula (3), for compatibility with and dispersion in component (A) a molar ratio of SiH-containing siloxane units to SiH-free siloxane units, which is represented by the value of q/(p+2) in formula (3), is at least 1, more preferably 2 to 10, and even more preferably 2 to 5. Also, the content of SiH groups in the molecule is preferably 0.003 to 0.02 mol/g, more preferably 0.004 to 0.016 mol/g.

The trifluoropropyl-containing organohydrogenpolysiloxane containing at least one trifluoropropyl per molecule represented by formula (2), has high affinity to and good dispersion in component (A), i.e., organopolysiloxane of average compositional formula (1), which has a high concentration of trifluoropropyl groups. By contrast, the organohydrogenpolysiloxane containing no trifluoropropyl in the molecule represented by formula (3), has low affinity to component (A). Then the organohydrogenpolysiloxane is less dispersible and little incorporated in the crosslinked structure unless it has a smaller molecular structure (or lower DOP).

The organohydrogenpolysiloxane as component (C) is blended in such an amount that a molar ratio of silicon-bonded hydrogen atoms (i.e., SiH groups) in component (C) to silicon-bonded aliphatic unsaturated groups (typically alkenyl groups) in component (A) ranges from 0.9 to 10 mol/mol, preferably 1.0 to 8 mol/mol, and more preferably 1.2 to 7 mol/mol. Differently stated, the organohydrogenpolysiloxane as component (C) may be blended in an amount of 0.01 to 30 parts, preferably 0.05 to 20 parts, and more preferably 0.1 to 10 parts by weight per 100 parts by weight of the organopolysiloxane as component (A).

Component (D) is a hydrosilylation catalyst. Any of well-known hydrosilylation catalysts may be used. Typical catalysts are platinum group metal based catalysts including platinum catalysts such as platinum black, platinic chloride, chloroplatinic acid, reaction products of chloroplatinic acid with monohydric alcohols, complexes of chloroplatinic acid with olefins, and platinum bisacetoacetate, palladium catalysts, and rhodium catalysts. The catalyst may be added in a catalytic amount, specifically 0.5 to 1,000 ppm, more specifically 1 to 200 ppm of platinum group metal based on the weight of the organopolysiloxane (A).

In the fluorosilicone rubber composition of the invention, various additives may be added if necessary and insofar as the objects of the invention are not impaired. Suitable additives include fillers such as non-reinforcing silica (e.g., ground quartz and diatomaceous earth), carbon black (e.g., acetylene black, furnace black and channel black), and calcium carbonate, colorants, heat resistance improvers (e.g., cerium oxide), oil resistance improvers, flame retardants, acid acceptors, heat transfer improvers, mold release agents, dispersants (e.g., alkoxysilanes, diphenylsilane diols, carbon functional silanes and silanol-endcapped low molecular weight siloxanes), and reaction regulators.

The fluorosilicone rubber composition may be prepared by intimately mixing predetermined amounts of the foregoing components on a rubber milling machine such as a twin-roll mill, kneader or Banbury mixer.

It is not critical how to mold the fluorosilicone rubber composition. Any conventional molding methods such as compression molding, injection molding, transfer molding, extrusion molding, and calender molding may be used. Also the curing conditions are not critical. Generally heat curing conditions include a temperature of 80 to 500°C, especially 100 to 400°C and a time of 5 seconds to 1 hour, especially 30 seconds to 30 minutes. The composition as molded may be post-cured at 100 to 200°C for about 10 minutes to 10 hours.

The cured product of the fluorosilicone rubber composition according to the invention should preferably have fuel oil resistance as represented by a volume change of up to 50%, more preferably up to 25% after the fuel oil resistance test of JIS K-6258 prescribing 70 hours of immersion in Fuel C at 23°C. In order that the cured fluorosilicone product meet a volume change in the range, a special measure is preferably taken in formulating the uncured fluorosilicone rubber composition such that the amount of extra organopolysiloxane (e.g., dimethylsilicone) other than the fluorosilicone component (specifically trifluoropropyl-containing organopolysiloxane (A)) and the organohydrogenpolysiloxane (C) as crosslinking agent is restricted to less than 5% by weight (specifically 0 to 4.9% by weight), especially 0 to 3% by weight based on the overall composition (i.e., total of components (A) to (D)).

### EXAMPLE

Preparation Examples, Examples and Comparative Examples are given below by way of illustration of the invention and not by way of limitation. All parts are by weight. Mw and DOP are a weight average molecular weight and weight average degree of polymerization, respectively, as determined versus polystyrene standards by GPC using toluene as development solvent. Viscosity is a kinematic viscosity measured at 25°C by an Ostwald's viscometer.

### Preparation of compound

### Preparation Example 1

### Compound A1

To 100 parts of organopolysiloxane gum having formula (5), shown below, were added 24 parts of dry silica having a BET specific surface area of 130 m²/g and 3 parts of a silanol-endcapped dimethylpolysiloxane having a viscosity of 30 mm²/g as dispersant. The mixture was milled on a kneader and heat treated at 150°C for 3 hours. Finally, cerium oxide powder as heat resistance improver was added in an amount corresponding to 0.8% by weight (based on the resulting compound). In this way, Compound A1 was prepared.

It is noted that the silanol-endcapped dimethylpolysiloxane refers to a dimethylpolysiloxane capped with silanol at both ends.

### Preparation Example 2

### Compound A2

To 100 parts of organopolysiloxane gum having formula (5) were added 44 parts of dry silica having a BET specific surface area of 130 m²/g and 8 parts of a silanol-endcapped dimethylpolysiloxane having a viscosity of 30 mm²/g as dispersant. The mixture was milled on a kneader and heat treated at 150°C for 3 hours. Finally, an amount (corresponding to 0.8 wt%) of cerium oxide powder as heat resistance improver was added, yielding Compound A2.

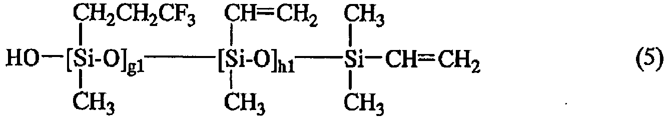

Note that g1 and h1 are positive numbers meeting g1+h1 = ∼3,000 (weight average value) and h1/(g1+h1) = 0.3±0.05 mol%.

### Preparation Example 3

### Compound B1

To 100 parts of organopolysiloxane gum having formula (6), shown below, were added 20 parts of dry silica having a BET specific surface area of 200 m²/g, and 3 parts of a silanol-endcapped dimethylpolysiloxane having a viscosity of 30 mm²/g and 1.5 parts of diphenylsilane diol as dispersant. The mixture was milled on a kneader and heat treated at 150°C for 3 hours. Finally, an amount (corresponding to 0.8 wt%) of cerium oxide powder as heat resistance improver was added, yielding Compound B1.

### Preparation Example 4

### Compound B2

To 100 parts of organopolysiloxane gum having formula (6) were added 34 parts of dry silica having a BET specific surface area of 200 m²/g, and 5 parts of a silanol-endcapped dimethylpolysiloxane having a viscosity of 30 mm²/g and 2 parts of diphenylsilane diol as dispersant. The mixture was milled on a kneader and heat treated at 150°C for 3 hours. Finally, an amount (corresponding to 0.8 wt%) of cerium oxide powder as heat resistance improver and 10 parts of ground quartz as hardness modifier were added, yielding Compound B2. 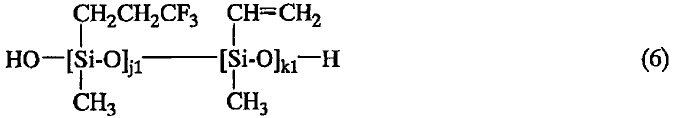 Note that j1 and k1 are positive numbers meeting j1+k1 = ~3,000 (weight average value) and k1/(j1+k1) = 0.15±0.03 mol%.

### Preparation Example 5

### Compound C1

To 100 parts of organopolysiloxane gum having formula (7), shown below, were added 26 parts of dry silica having a BET specific surface area of 300 m²/g, and 4 parts of a silanol-endcapped dimethylpolysiloxane having a viscosity of 30 mm²/g and 2 parts of diphenylsilane diol as dispersant. The mixture was milled on a kneader and heat treated at 150°C for 3 hours. Finally, an amount (corresponding to 0.8 wt%) of cerium oxide powder as heat resistance improver was added, yielding Compound C1.

### Preparation Example 6

### Compound C2

To 100 parts of organopolysiloxane gum having formula (7) were added 41 parts of dry silica having a BET specific surface area of 300 m²/g, and 8 parts of a silanol-endcapped dimethylpolysiloxane having a viscosity of 30 mm²/g and 3 parts of diphenylsilane diol as dispersant. The mixture was milled on a kneader and heat treated at 150°C for 3 hours. Finally, an amount (corresponding to 0.8 wt%) of cerium oxide powder as heat resistance improver was added, yielding Compound C2. 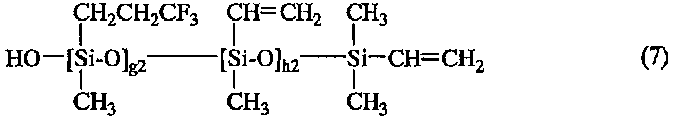 Note that g2 and h2 are positive numbers meeting g2+h2 = ∼3,000 (weight average value) and h2/(g2+h2) = 0.05±0.02 mol%.

### Example 1

With milling on a twin-roll mill, a combined addition/crosslinking/curing agent was added to 100 parts of Compound A1. The combined agent contained 0.5 part of platinum catalyst C-25A (platinum concentration ∼1 wt%), 0.4 part of addition reaction regulator X-93-1242, and 0.92 part of a crosslinker, organohydrogenpolysiloxane having the average molecular formula (10), all available from Shin-Etsu Chemical Co., Ltd. After uniform milling, the resulting composition was press cured at 165°C and 7 MPa for 10 minutes and post-cured at 200°C for 4 hours to form a test sheet. Vulcanization behavior and physical properties were measured by the following methods, with the results shown in Table 3.

### [Vulcanization behavior]

Vulcanization behavior was examined at 165°C for 10 minutes according to JIS K6300 using a moving die rheometer (MDR by Alpha Technologies).
T10: a time duration from the start of heating until vulcanization proceeds to 10% (i.e., torque reaches 10% of the maximum torque MH on the vulcanization curve), vulcanization onset point
T90: a time duration from the start of heating until vulcanization proceeds to 90% (i.e., torque reaches 90% of the maximum torque MH on the vulcanization curve), optimum vulcanization point
MH: maximum torque (maximum torque at a particular point of time in the region where the vulcanization curve becomes steady under 165°C/10 min conditions; the particular point of time in Examples and Comparative Examples is 10 minutes)

### [Physical properties]

A rubber composition was press cured at 165°C for 10 minutes and post-cured at 200°C for 4 hours to form a test sheet. According to JIS K6249 (including JIS Standards cited therein), the test sheet was measured for hardness (Durometer A), tensile strength, elongation at break, density, modulus of resilience, tear strength, and compression set.

The sheet was also examined for fuel oil resistance according to JIS K-6258 by immersing the sheet in Fuel C at 23°C for 70 hours and determining a volume change (%) before and after the test.

### Examples 2 to 10 and Comparative Examples 1, 5, 9 to 12

Test sheets were prepared by the same procedure as in Example 1 aside from using Compound B1, C1, A2, B2, or C2 and a crosslinker having any one of the average molecular formulae (8) to (13) as shown in Tables 3 to 6. They were examined for vulcanization behavior and physical properties as in Example 1, with the results shown in Tables 3 to 6.

### Comparative Example 2

With milling on a twin-roll mill, 0.8 part of peroxide C-8A (Shin-Etsu Chemical Co., Ltd.) as curing agent was added to 100 parts of Compound A1. After uniform milling, the resulting composition was press cured at 165°C and 7 MPa for 10 minutes and post-cured at 200°C for 4 hours to form a test sheet. It was examined for vulcanization behavior and physical properties as in Example 1, with the results shown in Table 3.

### Comparative Examples 3, 4, 6 to 8

Test sheets were prepared by the same procedure as in Comparative Example 2 aside from using Compound B1, C1, A2, B2, or C2 as shown in Tables 3 to 6. They were examined for vulcanization behavior and physical properties as in Example 1, with the results shown in Tables 3 to 6.

The crosslinkers used are identified below by their average molecular formula.

### Average molecular formula (8)

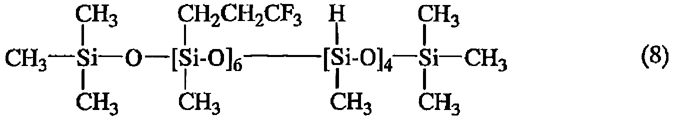

### Average molecular formula (9)

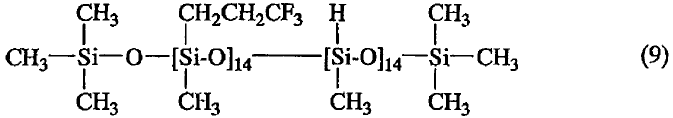

### Average molecular formula (10)

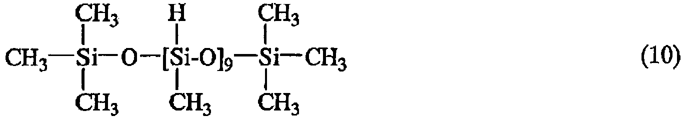

### Average molecular formula (11)

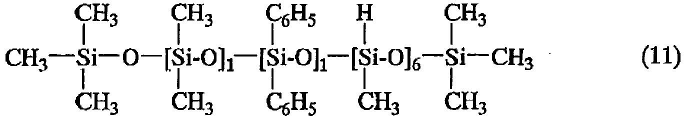

### Average molecular formula (12)

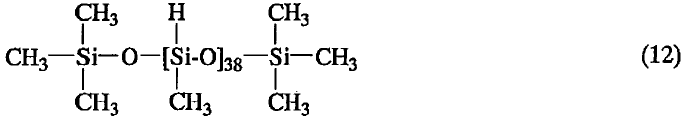

### Average molecular formula (13)

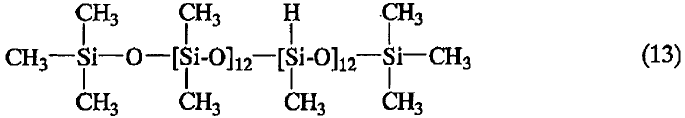

The average molecular weight and SiH content (crosslinking group content) of these crosslinkers are summarized In Tables 1 and 2.

**Table 1**

| Average molecular formula | (8) | (9) |
|---|---|---|
| Average molecular weight | 1,338 | 3,186 |
| SiH content (mol/g) | 0.0030 | 0.0044 |

**Table 2**

| Average molecular formula | (10) | (11) | (12) | (13) |
|---|---|---|---|---|
| Average molecular weight | 713 | 794 | 2,442 | 1,807 |
| SiH content (mol/g) | 0.0145 | 0.0092 | 0.0164 | 0.0073 |

**Table 3**

| | Example | | Comparative Example | | | |
|---|---|---|---|---|---|---|
| | 1 | 2 | 1²⁾ | 2 | 3 | 4 |
| Compound | A1 | B1 | C1 | A1 | B1 | C1 |
| Cure type | addition | addition | addition | peroxide | peroxide | peroxide |
| Crosslinker | formula (10) | formula (10) | formule (10) | C-8A | C-8A | C-8A |
| Amount of crosslinker, pbw | 0.92 | 0.92 | 0.55 | 0.80 | 0.80 | 0.80 |
| SiH/V1 ratio¹⁾ | 5 | 10 | 30 | - | - | - |
| T10, min | 0.2 | 0.2 | 0.2 | 0.6 | 0.7 | 0.6 |
| T90, min | 2.4 | 2.9 | 6.1 | 3.8 | 4.9 | 5.6 |
| MH, kg·cm | 12 | 8 | 7 | 12 | 11 | 9 |
| Density, g/cm³ | 1.40 | 1.37 | UM | 1.41 | 1.38 | 1.41 |
| Hardness, Durometer A | 45 | 45 | UM | 45 | 43 | 41 |
| Tensile strength, MPa | 8.6 | 5.3 | UM | 9.6 | 9.2 | 13.5 |
| Elongation at break, % | 290 | 500 | UM | 300 | 470 | 600 |
| Tear strength (crescent), kN/m | 12 | 11 | UM | 9 | 14 | 32 |
| Modulus of resilience, % | 47 | 44 | UM | 51 | 48 | 26 |
| Compression set @ 180° C/22 hr, % | 28 | 25 | UM | 16 | 14 | 12 |
| Volume change as fuel oil resistance, % | 23 | 27 | UM | 22 | 22 | 23 |

| | | | | | | |
|---|---|---|---|---|---|---|
| 1) SiH/Vi ratio indicates a molar ratio of silicon-bonded hydrogen atoms in organohydrogenpolysiloxane (C) to monovalent aliphatic unsaturated hydrocarbon groups in organopolysiloxane (A) in the fluorosilicone rubber composition. 2) Rubber physical properties of Comparative Example 1 were unmeasurable (UM) due to short-vulcanization and foaming. | | | | | | |

**Table 4**

| | Example | | Comparative Example | | | |
|---|---|---|---|---|---|---|
| | 3 | 4 | 5³⁾ | 6 | 7 | 8 |
| Compound | A2 | B2 | C2 | A2 | B2 | C2 |
| Cure type | addition | addition | addition | peroxide | peroxide | peroxide |
| Crosslinker | formula (10) | formula (10) | formula (10) | C-8A | C-8A | C-8A |
| Amount of crosslinker, pbw | 0.92 | 0.92 | 0.92 | 0.80 | 0.80 | 0.80 |
| SiH/Vi ratio¹⁾ | 5 | 10 | 40 | - | - | - |
| T10, min | 0.2 | 0.2 | 0.2 | 0.6 | 0.6 | 0.6 |
| T90, min | 4.5 | 4.7 | 3.9 | 3.9 | 4.2 | 4.6 |
| MH, kg cm | 27 | 20 | 8 | 27 | 20 | 17 |
| Density, g/cm³ | 1.45 | 1.50 | UM | 1.46 | 1.51 | 1.46 |
| Hardness, Durometer A | 75 | 73 | UM | 74 | 72 | 59 |
| Tensile strength, MPa | 7.5 | 6.5 | UM | 9.3 | 8.7 | 11.5 |
| Elongation at break, % | 230 | 280 | UM | 200 | 300 | 580 |
| Tear strength (crescent), kN/m | 13 | 16 | UM | 13 | 17 | 48 |
| Modulus of resilience, % | 42 | 40 | UM | 37 | 36 | 19 |
| Compression set @ 180°C/22 hr, % | 11 | 21 | UM | 4 | 9 | 21 |
| Volume change as fuel oil resistance, % | 21 | 21 | UM | 21 | 21 | 21 |

| | | | | | | |
|---|---|---|---|---|---|---|
| 3) Rubber physical properties of Comparative Example 5 were unmeasurable (UM) due to short-vulcanization. | | | | | | |

**Table 5**

| | Example | | | Comparative Example | |
|---|---|---|---|---|---|
| | 5 | 6 | 7 | 9⁴⁾ | 10⁴⁾ |
| Compound | A2 | A2 | A2 | A2 | A2 |
| Cure type | addition | addition | addition | addition | addition |
| Crosslinker | formula (8) | formula (9) | formula (11) | formula (12) | formula (13) |
| Amount of crosslinker, pbw | 1.51 | 1.03 | 0.31 | 0.28 | 0.63 |
| SiH/Vi ratios¹⁾ | 5 | 5 | 5 | 5 | 5 |
| T10, min | 0.2 | 0.2 | 0.2 | 0.2 | 0.2 |
| T90, min | 0.7 | 0.6 | 3.1 | 4.5 | 3.9 |
| MH, kg·cm | 21 | 26 | 18 | 8 | 9 |
| Density, g/cm³ | 1.45 | 1.45 | 1.45 | UM | UM |
| Hardness, Durometer A | 68 | 73 | 68 | UM | UM |
| Tensile strength, MPa | 7.8 | 7.7 | 6.2 | UM | UM |
| Elongation at break, % | 340 | 270 | 380 | UM | UM |
| Tear strength (crescent), kN/m | 20 | 15 | 16 | UM | UM |
| Modulus of resilience, % | 35 | 40 | 36 | UM | UM |
| Compression set @ 180° C/22 hr, % | 15 | 12 | 26 | UM | UM |
| Volume change as fuel oil resistance, % | 23 | 21 | 21 | UM | UM |

| | | | | | |
|---|---|---|---|---|---|
| 4) Rubber physical properties of Comparative Examples 9 and 10 were unmeasurable (UM) due to short-vulcanization. | | | | | |

**Table 6**

| | Example | | | Comparative Example | |
|---|---|---|---|---|---|
| | 8 | 9 | 10 | 11⁵⁾ | 12⁵⁾ |
| Compound | B2 | B2 | B2 | B2 | B2 |
| Cure type | addition | addition | addition | addition | addition |
| Crosslinker | formula (8) | formula (9) | formula (11) | formula (12) | formula (13) |
| Amount of crosslinker, pbw | 3.20 | 2.18 | 0.80 | 0.66 | 1.32 |
| S1H/V1 ratio¹⁾ | 5 | 5 | 5 | 5 | 5 |
| T10, min | 0.3 | 0.2 | 0.2 | 0.2 | 0.2 |
| T90, min | 1.0 | 0.5 | 2.1 | 0.5 | 3.9 |
| MH, kg·cm | 14 | 13 | 12 | 10 | 8 |
| Density, g/cm³ | 1.50 | 1.50 | 1.51 | UM | UM |
| Hardness, Durometer A | 61 | 62 | 59 | UM | UM |
| Tensile strength, MPa | 4.8 | 4.1 | 3.4 | UM | UM |
| Elongation at break, % | 430 | 400 | 420 | UM | UM |
| Tear strength (crescent), kN/m | 16 | 16 | 17 | UM | UM |
| Modulus of resilience, % | 31 | 36 | 34 | UM | UM |
| Compression set @ 180°C/22 hr, % | 33 | 30 | 37 | UM | UM |
| Volume change as fuel oil resistance, % | 24 | 23 | 23 | UM | UM |

| | | | | | |
|---|---|---|---|---|---|
| 5) Rubber physical properties of Comparative Examples 11 and 12 were unmeasurable (UM) due to short-vulcanization. | | | | | |

## Claims

1. An addition-curable fluorosilicone rubber composition comprising
(A) 100 parts by weight of a gum-like organopolysiloxane having the average compositional formula (1) :
R¹ₐR²_{b}R³_{c}SiO_{(4-a-b-c)/2} (1)
wherein R¹ is a trifluoropropyl group, R² is each independently a monovalent aliphatic unsaturated hydrocarbon group of 2 to 8 carbon atoms or hydroxyl group, at least two of R² are monovalent aliphatic unsaturated hydrocarbon groups, R³ is each independently an unsubstituted, monovalent aliphatic saturated hydrocarbon group of 1 to 8 carbon atoms or monovalent aromatic hydrocarbon group of 6 to 10 carbon atoms, a, b and c are positive numbers satisfying 0.96 ≤ a ≤ 1.01, 0.0005 ≤ b ≤ 0.01, 0.96 ≤ c ≤ 1.06, and 1.98 ≤ a+b+c ≤ 2.02, said organopolysiloxane having a weight average degree of polymerization of at least 2,000,
(B) 5 to 100 parts by weight of a silica filler,
(C) at least one organohydrogenpolysiloxane selected from a trifluoropropyl-containing organohydrogenpolysiloxane having the general formula (2): 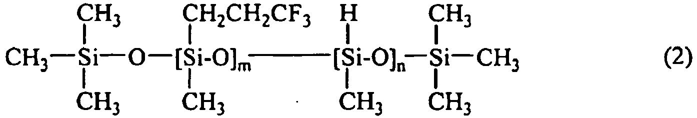 wherein m is an integer of 1 to 48, n is an integer of 2 to 40, and the sum of m and n is 3 to 50, and a trifluoropropyl-free organohydrogenpolysiloxane having the general formula (3) : 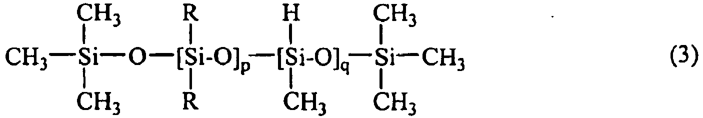 wherein R is independently methyl or phenyl, p is an integer of 0 to 18, q is an integer of 2 to 15, the sum of p and q is 2 to 20, and the ratio of q/(p+2) is at least 1, in such an amount that a molar ratio of silicon-bonded hydrogen atoms in component (C) to monovalent aliphatic unsaturated hydrocarbon groups in component (A) falls in a range of 0.9 to 10,
(D) a catalytic amount of a hydrosilylation catalyst.

2. The fluorosilicone rubber composition of claim 1 wherein the organopolysiloxane as component (A) has a backbone composed of difunctional diorganosiloxane units containing 0.10 to 1.0 mol% of organoalkenylsiloxane units.

3. The fluorosilicone rubber composition according to any one of claims 1 or 2 wherein in the general formula (2), the ratio of m/n is at least 1.

## Patentansprüche

1. Additionshärtbare Fluorsiliconkautschukzusammensetzung, umfassend
(A) 100 Gewichtsteile eines gummiartigen Organopolysiloxans mit der durchschnittlichen Zusammensetzungsformel (1):
R¹ₐR²_{b}R³_{c}SiO_{(4-a-b-c)/2} (1)
worin R¹ eine Trifluorpropylgruppe ist, R² jeweils unabhängig eine einwertige, aliphatische, ungesättigte Kohlenwasserstoffgruppe mit 2 bis 8 Kohlenstoffatomen oder Hydroxylgruppe ist, wobei mindestens zwei von R² einwertige, aliphatische, ungesättigte Kohlenwasserstoffgruppen sind, R³ jeweils unabhängig eine unsubstituierte, einwertige, aliphatische, gesättigte Kohlenwasserstoffgruppe mit 1 bis 8 Kohlenstoffatomen oder einwertige, aromatische Kohlenwasserstoffgruppe mit 6 bis 10 Kohlenstoffatomen ist, a, b und c positive Zahlen sind, welche 0,96 ≤ a ≤ 1,01, 0,0005 ≤ b ≤ 0,01, 0,96 ≤ c ≤ 1,06 und 1,98 ≤ a+b+c ≤ 2,02 genügen, wobei das Organopolysiloxan einen gewichtsmittleren Polymerisationsgrad von mindestens 2.000 besitzt,
(B) 5 bis 100 Gewichtsteile eines Silica-Füllstoffs,
(C) mindestens ein Organohydrogenpolysiloxan, gewählt aus einem Trifluorpropyl enthaltenden Organohydrogenpolysiloxan der allgemeinen Formel (2): 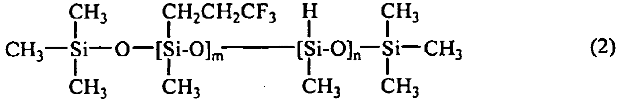 worin m eine ganze Zahl von 1 bis 48 ist, n eine ganze Zahl von 2 bis 40 ist, und die Summe aus m und n 3 bis 50 ist, und einem Trifluorpropyl freien Organohydrogenpolysiloxan der allgemeinen Formel (3): 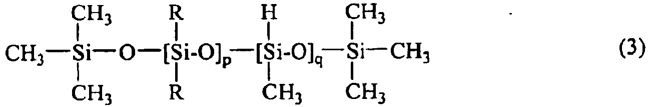 worin R unabhängig Methyl oder Phenyl ist, p eine ganze Zahl von 0 bis 18 ist, q eine ganze Zahl von 2 bis 15 ist, die Summe aus p und q 2 bis 20 ist, und das Verhältnis von q/(p+2) mindestens 1 ist, in einer solchen Menge, dass ein Molverhältnis von Siliciumgebundenen Wasserstoffatomen in Komponente (C) zu einwertigen, aliphatischen, ungesättigten Kohlenwasserstoffgruppen in Komponente (A) in einen Bereich von 0,9 bis 10 fällt,
(D) eine katalytische Menge eines Hydrosilylierungskatalysators.

2. Fluorsiliconkautschukzusammensetzung nach Anspruch 1, wobei das Organopolysiloxan als Komponente (A) ein Grundgerüst aufweist, zusammengesetzt aus difunktionellen Diorganosiloxaneinheiten, enthaltend 0,10 bis 1,0 Mol.-% Organoalkenylsiloxaneinheiten.

3. Fluorsiliconkautschukzusammensetzung nach irgendeinem der Ansprüche 1 oder 2, wobei in der allgemeinen Formel (2) das Verhältnis von m/n mindestens 1 ist.

## Revendications

1. Composition de caoutchouc de fluorosilicone durcissable par addition comprenant
(A) 100 parties en poids d'un organopolysiloxane de type gomme ayant la formule de composition moyenne (1):
R¹ₐR²_{b}R³_{c}SiO_{(4-a-b-c)/2} (1)
dans laquelle R¹ est un groupe trifluoropropyle, R² sont chacun indépendamment un groupe hydrocarboné monovalent aliphatique insaturé de 2 à 8 atomes de carbone ou un groupe hydroxyle, et au moins deux des groupes R² sont des groupes hydrocarbonés monovalents aliphatiques insaturés, R³ représente chacun indépendamment un groupe hydrocarboné monovalent aliphatique saturé, non substitué, ayant de 1 à 8 atomes de carbone ou un groupe hydrocarboné aromatique monovalent ayant de 6 à 10 atomes de carbone, a, b et c sont des nombres positifs satisfaisant 0,96 ≤ a ≤ 1,01, 0,0005 ≤ b ≤ 0,01, 0,96 ≤ c ≤ 1,06, et 1,98 ≤ a + b + c ≤ 2,02, ledit organopolysiloxane ayant un degré de polymérisation moyen en poids d'au moins 2.000,
(B) 5 à 100 parties en poids d'une charge de silice,
(C) au moins un organohydrogénopolysiloxane choisi parmi un organohydro-génopolysiloxane contenant trifluoropropyle ayant la formule générale (2) : 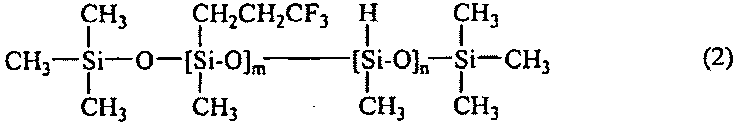 dans laquelle m est un nombre entier de 1 à 48, n est un nombre entier de 2 à 40, et la somme de m et de n est 3 à 50, et un organohydrogénopolysiloxane exempt de trifluoropropyle ayant la formule générale (3) : 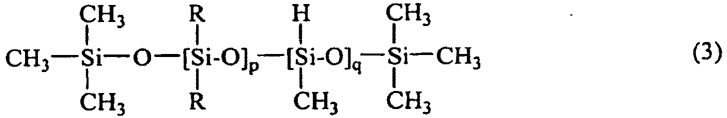 dans laquelle R est indépendamment méthyle ou phényle, p est un nombre entier de 0 à 18, q est un nombre entier de 2 à 15, la somme de p et de q est 2 à 20, et le rapport de q / (p + q) est au moins 1, en une telle quantité que le rapport molaire des atomes d'hydrogène liés au silicium dans le composant (C) aux groupes hydrocarbonés monovalents aliphatiques insaturés dans le composant (A) se situe dans une plage de 0,9 à 10,
(D) une quantité catalytique d'un catalyseur d'hydrosilylation.

2. La composition de caoutchouc de fluorosilicone selon la revendication 1, dans laquelle l'organopolysiloxane en tant que composant (A) a un squelette composé d'unités de diorganosiloxane difonctionnelles contenant 0,10 à 1,0% en moles d'unités organoalkenylsiloxane.

3. La composition de caoutchouc de fluorosilicone selon l'une quelconque des revendications 1 ou 2, dans laquelle, dans la formule générale (2), le rapport de m / n est au moins 1.
